# NEUE EUROPÄISCHE PATENTSCHRIFT

(11) **EP 1 454 966 B2**
(45) Veröffentlichungstag und Bekanntmachung des Hinweises auf die Entscheidung über den Einspruch: **31.08.2011**
(45) Hinweis auf die Patenterteilung: 19.09.2007
(21) Anmeldenummer: 04005244.1
(22) Anmeldetag: 05.03.2004
(51) Int. Cl.: C09D 5/29, C09D 5/00, C09D 5/06

(54) **Effektelemente enthaltendes Anstrichmittel**
Paint containing element effect
Peinture contenant des éléments à effets

(30) Priorität: 07.03.2003 DE 10310398
(43) Veröffentlichungstag der Anmeldung: 08.09.2004
(73) Patentinhaber: J.W. Ostendorf GmbH & Co. KG., 48651 Coesfeld (DE)
(72) Erfinder: Ostendorf, Michael, 48653 Coesfeld (DE)
(74) Vertreter: Stenger, Watzke & Ring

(56) Entgegenhaltungen:
- EP-A- 1 004 638
- EP-A1- 0 882 773
- EP-A2- 1 004 638

## Beschreibung

Die vorliegende Erfindung betrifft ein Effektelemente aufweisendes Anstrichmittel zumindest enthaltend eine Polymerdispersion, einen Verdicker, einen Extender, ein Farbmittel, Wasser sowie mindestens ein zusätzliches Additiv. Ferner wird ein Verfahren zur Herstellung eines derartigen Anstrichmittels offenbart.

Unter Anstrichmittel werden im allgemeinen flüssige, pasten- oder pulverförmige Beschichtungsstoffe, wie beispielsweise Dispersionsfarben, Putze, Effekte, Grundierungen, Lacke und Lasuren, zur Beschichtung von Oberflächen insbesondere von mineralischen Untergründen, Holz und/oder Metall, zusammengefaßt. Sie enthalten in der Regel mindestens ein Bindemittel, einen Extender, ein Farbmittel sowie Wasser. Daneben können Additive, wie zum Beispiel Entschäumer, Netzmittel, Verlaufsmittel und/oder Verdicker enthalten sein. Ebenso ist der Einsatz von Aminen oder Laugen zur Einstellung eines alkalischen pH-Wertes sowie die zusätzliche Verwendung von organischen Lösungsmitteln zur Filmbildung oder zur Verbesserung der Applikationseigenschaften üblich.

Auch der Einsatz von Effektelementen zur Veränderung zumeist optischer Eigenschaften in einer Beschichtung ist bereits seit langem bekannt. So werden beispielsweise monochrome oder farbige Mischungen von Kunststoffchips auf Basis von Polyester und Polyacrylat angeboten, die in einen noch feuchten Anstrichfilm eingestreut oder eingespritzt und anschließend mit einem Klarlack versiegelt werden. Ebenso bekannt sind auch Aluminium- oder Polyesterflitter, die, in einem Klarlack eingesetzt, auf einen farbigen Untergrund aufgetragen werden.

Als nachteilig müssen hierbei jedoch, bedingt durch die zumindest zweimalige Applikation, die vielen Arbeitsschritte angesehen werden.

Weiterhin sind sogenannte Multicolorprodukte, wie sie beispielsweise in der US-Patentschrift 2,591,904 beschrieben sind, am Markt bekannt. Diese Produkte bestehen aus zwei Phasen - eine Lackphase, in welcher Pigmente dispergiert sind, und eine Wasserphase, enthaltend Wasser und ein Schutzkolloid. Die Lackphase wird unter Rühren in die Wasserphase eingebracht. Infolge der Unverträglichkeit der zwei Systeme werden kleine Kugeln oder Flocken des Lackes geformt. Durch Mischen derartig hergestellter verschieden farbiger Lacke erhält man die Multicolorprodukte, bei denen die einzelnen Farbkugeln/-flocken nebeneinander und separat vorliegen. Diese Produkte werden durch Spritzapplikation auf den Untergrund aufgetragen. Ein wesentlicher Nachteil dieser Produkte besteht darin, daß eine Applikation mittels Rolle oder Pinsel aufgrund mangelnder Scherstabilität nicht möglich ist. Zudem enthalten derartige Produkte einen hohen Anteil an organischen Lösungsmitteln.

Darüber hinaus ist aus der EP-Patentanmeldung 1004 638 A2 ein wäßriges Produkt bekannt, welches durch Mischen einer farbigen Base mit einer neutralen monochrome weiße Flocken enthaltenden Base erzielt wird. Zur Herstellung der neutralen Base wird vorab ein Zwischenprodukt aus einer ersten und zweiten Lösung beziehungsweise einem ersten und einem zweiten Halbfabrikat gefertigt, welches die Flocken enthält. Zu diesem Halbfabrikat wird dann eine weitere, dritte Base beziehungsweise ein drittes Halbfabrikat zur Bildung der für das Endprodukt notwendigen neutralen Base hinzugefügt. Als großer Nachteil der vorgenannten Produkte muß das sehr komplexe Herstellungsverfahren angesehen werden, da zur Fertigung des Endproduktes vorab die Herstellung von zumindest vier verschiedenen Halbfabrikaten erforderlich ist. Dazu kommt noch, daß die farbige Base so wie auch das dritte Halbfabrikat mindestens ein Koaleszenzmittel und das erste Halbfabrikat mindestens ein organisches Lösungsmittel aufweist, wodurch auch der Einsatz derartiger Produkte aus umweltrelevanten Gründen sowohl bezogen auf den Herstellungsprozeß sowie auch auf die Anwendung als nachteilig anzusehen ist.

Zur Vermeidung der vorstehend aufgezeigten Nachteile liegt der vorliegenden Erfindung die **Aufgabe** zugrunde, ein Effektelemente aufweisendes Anstrichmittel zu formulieren, welches ohne zusätzliche Sicherungs- beziehungsweise Schutzmaßnahmen einfach, schnell und kostengünstig hergestellt und verarbeitet werden kann. Ferner soll das Anstrichmittel scherstabil sein und gleichzeitig eine hohe Lagerstabilität zur Vermeidung von Eigenschaftsveränderungen aufweisen. Weiterhin soll eine Applikation mittels Pinsel, Roller und/oder Bürste möglich sein und der gewünschte Effekt sollte in nur einem Beschichtungsauftrag zu erzielen sein.

Die Aufgabe wird erfindungsgemäß durch ein Anstrichmittel der eingangs genannten Art **gelöst,** welches (durch die Merkmale des Anspruches 1) gekennzeichnet ist.

Überraschenderweise zeigte sich, daß durch die gezielte Herstellung und Mischung der drei Halbfabrikate ein Effektelemente enthaltenes Anstrichmittel auf Wasserbasis erzielt wird, welches einen kontinuierlichen, lufttrocknenden Film auf verschiedenen Substratoberflächen ausbildet und gleichzeitig eine hohe Lagerstabilität zur Vermeidung von Eigenschaftsveränderungen aufweist sowie hoch qualitativ bleibt, ohne daß der Einsatz aufgrund relevanter, qualitativer Abweichungen im Hinblick auf den Verarbeitungszustand eingeschränkt wäre.

Insbesondere durch die gezielte Verwendung von Metallionen wird eine Ausfällung beziehungsweise eine Ausflockung der Effektelemente gesteuert. Gemäß der Zusammensetzung des erfindungsgemäßen Anstrichmittels weist die neutrale Base Metallionen auf. Es handelt sich hierbei um ein-, zwei- und/oder dreiwertige Metallionen aus der 1, 2 und/oder 3 Hauptgruppe sowie der 8. Nebengruppe des Periodensystems der Elemente (PSE). Als besonders vorteilhaft in bezug auf die gewünschte Ausflockung stellt sich die Verwendung von zwei- und/oder dreiwertigen Metallionen aus der Gruppe der Erdalkalimetalle heraus.

Zur Herstellung des erfindungsgemäßen Anstrichmittels werden drei unterschiedliche Halbfabrikate bereitgestellt und gezielt miteinander gemischt. Bei den drei Halbfabrikaten handelt es sich bevorzugt um zwei farblose Basen, welche zu einer neutralen Base gemischt werden. Vorteilhafterweise erfolgt die Mischung im Verhältnis von 3 bis 90 Gew.-% des ersten Halbfabrikats mit 10 bis 97 Gew.-% des zweiten Halbfabrikates, wobei durch eine entsprechende beziehungsweise gezielte Formulierung des ersten Halbfabrikates die Herstellung weißer und schwarzer sowie auch bunter Effektelemente möglich ist. Dieses Zwischenprodukt (die neutrale Base) wird nachfolgend, zur Herstellung des farbigen Endprodukts, mit dem dritten farbgebenden Halbfabrikat, einer farbigen Paste, erfindungsgemäß im Verhältnis von 70 bis 99 Gew.-% der neutralen Base mit 1 bis 30 Gew.-% der farbigen Paste gemischt.

Gemäß der Zusammensetzung des erfindungsgemäßen Anstrichmittels enthält das erste Halbfabrikat zumindest einen Verdicker, ein Pigment und/oder eine Pigmentpaste, einen Extender, handelsübliche Additive sowie Wasser. Das zweite Halbfabrikat weist ebenfalls einen Verdicker, einen Extender, handelsübliche Additive sowie Wasser auf. Darüber hinaus wird dem zweiten Halbfabrikat ein Polymer (mit einer MFT von 0 bis 5°C) zugesetzt. Außerdem werden dem zweiten Halbfabrikat die Metallionen mit einem Anteil von 0,5 bis 15 Gew.-% bezogen auf das Gewicht des zweiten Halbfabrikates, insbesondere in Form von Salzen, zugegeben. Als Salze eignen sich hierbei insbesondere Carbonate, Sulfate, Chloride, Borate, Phosphate etc., ohne sich auf diese zu beschränken.

Als Verdicker enthält das erfindungsgemäße Anstrichmittel im ersten Halbfabrikat vorteilhafterweise eine Celluloseverbindung, wie beispielsweise Methylcellulose, Hydroxyethylcellulose und/oder Na-Carboxymethylcellulose und im zweiten Halbfabrikat vorzugsweise einen Acryl- beziehungsweise einen Polyacrylverdicker und/oder einen Polyurethanverdicker.

Des weiteren weisen die beiden ersten Halbfabrikate zumindest einen Extender beziehungsweise Füllstoff aus den Bereichen Carbonat, Sulfat und/oder Silikat (beispielsweise in Form von Calciumcarbonat, Bariumsulfat, Siliziumsilikat, Siliziumdioxid, Magnesiumsilikat u. a.) auf.

Weiterhin weist das zweite Halbfabrikat ein Polymer mit einer MFT von 0 bis 5°C auf. Als Polymer enthält das erfindungsgemäße Anstrichmittel somit bevorzugt eine wasserverdünnbare, filmbildende Polymerverbindung mit einem Anteil von wenigstens 10 Gew.-% auf, wobei eine Polymerisatdispersion wie zum Beispiel eine wäßrige Dispersion eines Acrylpolymers o. ä. bevorzugt eingesetzt wird.

Das dritte Halbfabrikat hingegen weist zumindest ein Pigment und/oder eine Pigmentpaste, ein Netzmittel, einen pH-Wert-Stabilisator und Wasser auf. Optional kann das dritte Halbfabrikat zusätzlich noch einen oder mehrere handelsübliche Extender in den üblichen Mengen enthalten. Beispiele für geeignete Extender sind auch hier Quarzmehle, Calciumcarbonate, Talkum, Bariumsulfat, Silikate, Siliciumdioxid u. ä.

Da die Zusammensetzungen des erfindungsgemäßen Anstrichmittels pigmentiert oder farblos hergestellt und verwendet werden können, werden als Pigmente und/oder Pigmentpasten vorteilhafterweise geeignete Farbmittel wie Titandioxid, Ruß, Eisenoxid-, Aluminium-, Phthalocyanin-, Azopigmente u. ä, eingesetzt. Die Anwesenheit eines Pigments erfordert üblicherweise die Zugabe eines oder mehrerer oberflächenaktiver Mittel (wie beispielsweise Salze einer polymeren Carboxylsäure, Salze eines Acrylpolymers, modifizierte Alkylarylpolyether u. ä.), um eine Suspendierung des Pigments im flüssigen Träger sicherzustellen.

Daneben enthält das erfindungsgemäße Anstrichmittel handelsübliche Additive. Hierzu gehören beispielsweise Entschäumer, pH-Wert-Stabilisatoren, Verlaufs-, Mattierungs-, Adsorptions-, Konservierungs- und Thixotropiermittel.

Das erfindungsgemäße Effektelemente enthaltene farblose oder farbige Anstrichmittel kann vorteilhafterweise auf die verschiedensten Substrate wie beispielsweise auf mineralische Untergründe, Tapeten, Dispersionsfarben, Kunststoffe sowie NE-Metalle (Nichteisenmetalle) appliziert werden. Es zeichnet sich dabei durch ästhetisch ansprechende Effekte und sehr gute Haftungseigenschaften aus.

Als besonders vorteilhaft in bezug auf die Umweltverträglichkeit stellte sich heraus, daß bei einer derartigen Herstellung des erfindungsgemäßen Anstrichmittels auf jegliche Koaleszenz- und Lösungsmittel sowohl in der neutralen Base als auch in der farbigen Paste verzichtet werden kann. Dennoch lassen sich die auf diese Weise erhaltenen farbigen, Effektelemente enthaltenen lösungsmittelfreien Beschichtungsstoffe sehr gut mit dem Pinsel, der Rolle und/oder der Bürste applizieren, ohne daß durch die hohe Scherung die Effektelemente zerstört werden.

Die Produkte weisen eine gute Standfestigkeit, eine gute Kantenabdeckung des Untergrundes und eine gleichmäßige Beschichtung auf. Der farblose oder pigmentierte Film trocknet bei einer Umgebungstemperatur von mindestens 10° C rasch (üblicherweise in ca. 15 bis 30 Minuten) bis zur Staubtrockenheit. Die Offenzeit ist somit ausreichend für eine nachträgliche, individuelle Beeinflussung der Effektbeschichtung im noch nassen oder feuchten Zustand durch Spezialwerkzeuge, wie zum Beispiel Spatel, Besen o.ä.

Zur näheren Erläuterung der Erfindung wird im Folgenden eine allgemeine Zusammensetzung des erfindungsgemäßen Anstrichmittels sowie weitere Ausführungsbeispiele der einzelnen Halbfabrikate dargestellt, worauf sich die Erfindung jedoch nicht beschränken läßt.

### Zusammensetzung des erfindungsgemäßen Anstrichmittels:

Das erfindungsgemäße Anstrichmittel umfaßt im wesentlichen
eine neutrale Base, welche durch Mischen
eines *ersten Halbfabrikates*, enthaltend zumindest

| | |
|---|---|
| 0,5 - 15 | Gew.-% eines Verdickers, |
| 0,5 - 25 | Gew.-% eines Pigments und/oder einer Pigmentpaste |
| 1,0 - 10 | Gew.-% eines Extenders, |
| 0,5 - 10 | Gew.-% an handelsüblichen Additiven und |
| 20 - 95 | Gew.-% Wasser |

und eines *zweiten Halbfabrikates*, enthaltend zumindest

| | |
|---|---|
| 0,5 - 15 0,5 - 5 20 - 80 1 - 20 0,5 - 10 20 - 95 | Gew.-% an 1-,2- oder 3-wertige Metallionen, Gew.-% eines Verdickers, Gew.-% eines Polymers (mit einer MFT von 0 bis 5°C), Gew.-% eines Extenders, Gew.-% an handelsüblichen Additiven und Gew.-% Wasser |

hergestellt wird, wobei als Zwischenprodukt (neutrale Base) Mischungen aus 3 - 90 Gew.-% des ersten Halbfabrikates mit 10 - 97 Gew.-% des zweiten Halbfabrikates angefertigt werden können,
und eine farbige Paste (ein *drittes farbgebendes Halbfabrikat*), enthaltend

| | |
|---|---|
| 1,0 - 70 | Gew.-% eines Pigments und/oder einer Pigmentpaste, |
| 0,5 - 4,9 | Gew.-% eines Netzmittels, |
| 0 - 2,0 | Gew.-% eines pH-Wert-Stabilisators und |
| 5 - 75 | Gew.-% Wasser |

Optional kann die farbige Paste noch einen oder mehrere Extender in den üblichen Mengen, bevorzugt jedoch von 0 - 40 Gew.-%, bezogen auf das Gewicht der farbigen Paste enthalten.

Das als farbiges Endprodukt vorliegende erfindungsgemäße Anstrichmittel wird, in Abstimmung auf den jeweiligen Einsatzbereich, durch Mischen von 70 - 99 Gew.-% der neutralen Base mit 1 - 30 Gew.-% der farbigen Paste erhalten.

Die Zusammensetzungen des erfindungsgemäßen Anstrichmittels weisen dabei eine sehr gute Applizierbarkeit auf den unterschiedlichsten Substraten, mit dem Pinsel, der Rolle und/oder der Bürste auf. Sie zeichnen sich durch eine gleichmäßige ästhetisch ansprechende Effekt-Beschichtung aus. Die Beständigkeiten der erfindungsgemäßen Effektlasuren entsprechen den Anforderungen auf dem gleichen Niveau wie die marktüblicher Standardprodukte. Der pigmentierte oder farblose Film trocknet bei einer Umgebungstemperatur von mindestens 10° C rasch bis zur Staubtrockenheit.

### Ausführungsbeispiele:

Die Erfindung wird nun anhand von Ausführungs- beziehungsweise Rezepturbeispielen der jeweiligen Halbfabrikate näher erläutert. Alle Angaben über Teile und Prozente sind dabei Gewichtsangaben, falls nicht ausdrücklich etwas anderes festgestellt wird.

### 1. Vier Beispiele zur Herstellung des ersten Halbfabrikates:

### Rezeptur A

Die folgenden Komponenten werden unter Rühren eingewogen:

| | |
|---|---|
| 85,9 | Teile Wasser |
| 1,2 | Teile Hydroxyethylcellulose |
| 0,4 | Teile eines handelsüblichen Konservierungsmittels |
| 3,0 | Teile Magnesiumsilikat |
| 9,5 | Teile Eisenoxidgelbpigment |

### Rezeptur B

Die folgenden Komponenten werden unter Rühren eingewogen:

| | |
|---|---|
| 88,4 | Teile Wasser |
| 1,8 | Teile Methylcellulose |
| 0,4 | Teile eines handelsüblichen Konservierungsmittels |
| 3,0 | Teile Bariumsulfat |
| 6,4 | Teile Titandioxid |

### Rezeptur C

Die folgenden Komponenten werden unter Rühren eingewogen:

| | |
|---|---|
| 90,1 | Teile Wasser |
| 2,3 | Teile Na-Carboxymethylcellulose |
| 0,4 | Teile eines handelsüblichen Konservierungsmittels |
| 5,0 | Teile Calciumcarbonat |
| 2,2 | Teile Phthalocyaninblau-Pigment |

### Rezeptur D

Die folgenden Komponenten werden unter Rühren eingewogen:

| | |
|---|---|
| 87,5 | Teile Wasser |
| 1,7 | Teile Carboxymethylcellulose |
| 0,4 | Teile eines handelsüblichen Konservierungsmittels |
| 0,4 | Teile eines handelsüblichen Dispergierhilfsmittels |
| 0,5 | Teile eines handelsüblichen Entschäumers |
| 2,5 | Teile Calciumcarbonat |
| 7,0 | Teile Titandioxid |

### 2. Sechs Beispiele zur Herstellung des zweiten Halbfabrikates:

### Rezeptur A

| | |
|---|---|
| 53,3 | Teile Wasser |
| 1,2 | Teile eines handelsüblichen Acrylverdickers |
| 35,5 | Teile eines Acrylpolymers, 50%ige Dispersion |
| 8,0 | Teile Natriumcarbonat |
| 0,5 | Teile eines handelsüblichen Entschäumers |
| 1,1 | Teile Siliziumdioxid |
| 0,4 | Teile eines handelsüblichen Konservierungsmittels |

### Rezeptur B

| | |
|---|---|
| 51,1 | Teile Wasser |
| 0,7 | Teile eines handelsüblichen Polyurethanverdickers |
| 39,7 | Teile eines Vinylacetatpolymers |
| 6,5 | Teile Aluminiumsulfat |
| 0,3 | Teile eines handelsüblichen Entschäumers |
| 1,3 | Teile Bentonite |
| 0,4 | Teile eines handelsüblichen Konservierungsmittels |

### Rezeptur C

| | |
|---|---|
| 56,5 | Teile Wasser |
| 0,9 | Teile eines handelsüblichen Polyurethanverdickers |
| 36,8 | Teile eines Acrylpolymers |
| 3,6 | Teile Eisenchlorid |
| 0,3 | Teile eines handelsüblichen Entschäumers |
| 1,5 | Teile Na-Al-Silikat |
| 0,4 | Teile eines handelsüblichen Konservierungsmittels |

### Rezeptur D

| | |
|---|---|
| 52,5 | Teile Wasser |
| 1,2 | Teile einer handelsüblichen Methylcellulose |
| 40,0 | Teile eines Acrylpolymers |
| 2,9 | Teile Calciumchlorid |
| 0,3 | Teile eines handelsüblichen Entschäumers |
| 2,7 | Teile Siliziumsilikat |
| 0,4 | Teile eines handelsüblichen Konservierungsmittels |

### Rezeptur E

| | |
|---|---|
| 55.8 | Teile Wasser |
| 0,8 | Teile eines handelsüblichen Acrylverdickers |
| 42,0 | Teile eines Acrylpolymers |
| 8,0 | Teile Natriumphosphat |
| 0,5 | Teile eines handelsüblichen Entschäumers |
| 2.5 | Teile Siliziumsilikat |
| 0,4 | Teile eines handelsüblichen Konservierungsmittels |

### Rezeptur F

| | |
|---|---|
| 67,5 | Teile Wasser |
| 5,0 | Teile eines handelsüblichen Verdickers |
| 25,0 | Teile eines handelsüblichen Reinacrylats |
| 0,9 | Teile Dinatriumtetraborat |
| 0,5 | Teile eines handelsüblichen Entschäumers |
| 0,7 | Teile Siliziumdioxid |
| 0,4 | Teile eines handelsüblichen Konservierungsmittels |

### 3. Drei Beispiele zur Herstellung des dritten Halbfabrikates:

### Rezeptur A (weiße Paste)

| | |
|---|---|
| 37,3 | Teile Wasser |
| 1,5 | Teile eines handelsüblichen Dispergiermittels |
| 0,5 | Teile eines handelsüblichen Acrylverdickers |
| 60,0 | Teile Titandioxid |
| 0,3 | Teile eines handelsüblichen Entschäumers |
| 0,4 | Teile eines handelsüblichen Konservierungsmittels |

### Rezeptur B (blaue Paste)

| | |
|---|---|
| 76,5 | Teile Wasser |
| 2,0 | Teile eines handelsüblichen Dispergiermittels |
| 0,3 | Teile eines handelsüblichen Acrylverdickers |
| 20,5 | Teile Phthalocyaninblau-Pigment |
| 0,3 | Teile eines handelsüblichen Entschäumers |
| 0,4 | Teile eines handelsüblichen Konservierungsmittels |

### Rezeptur C (gelbe Paste)

| | |
|---|---|
| 42,2 | Teile Wasser |
| 1,8 | Teile eines handelsüblichen Dispergiermittels |
| 0,3 | Teile eines handelsüblichen Polyurethanverdickers |
| 55,0 | Teile Eisenoxidgelb-Pigment |
| 0,3 | Teile eines handelsüblichen Entschäumers |
| 0,4 | Teile eines handelsüblichen Konservierungsmittels |

## Patentansprüche

1. Anstrichmittel mit Effektelementen zumindest enthaltend eine Polymerdispersion, einen Verdicker, einen Extender, ein Farbmittel, Wasser sowie mindestens ein zusätzliches Additiv,
**dadurch gekennzeichnet,**
**daß** das Anstrichmittel aus einer aus zwei Halbfabrikaten gefertigten neutralen Base sowie aus einer farbgebenden Paste vollständig lösemittelfrei auf Wasserbasis hergestellt wird,
wobei das erste Halbfabrikat zumindest einen Verdicker, ein Pigment und/oder eine Pigmentpaste, einen Extender, handelsübliche Additive sowie Wasser aufweist,
das zweite Halbfabrikat einen Verdicker, einen Extender, handelsübliche Additive sowie Wasser und ein Polymer mit einer Mlndestfilmbildungstemperatur von 0° bis 5° C und 0,5 bis 15 Gew.-% ein-, zwei- und/oder dreiwertige Metallionen bevorzugt zwei- und/oder dreiwertige Metallionen aus der 1, 2 und/oder 3 Hauptgruppe aufweist, mit welchen Ausfällung beziehungsweise eine Ausflockung der Effektelemente gesteuert wird
die farbgebende Paste ein Pigment und/oder eine Pigmentpaste, ein Netzmittel, ein pH-Wert-Stabilisator und Wasser aufweist,
wobei das Anstrichmittel 70 bis 99 Gew.-% der neutralen Base und 1 bis 30 Gew.-% der farbgebenden Paste aufweist.

2. Anstrichmittel nach einem der Ansprüche 1 bis 4, **dadurch gekennzeichnet, daß** dieses vorzugsweise Metallionen aus der Gruppe der Erdalkalimetalle aufweist.

3. Anstrichmittel nach einem der Ansprüche 1 bis 6, **dadurch gekennzeichnet, daß** dieses wenigstens 10 Gew.-% an Polymerverbindungen aufweist.

## Claims

1. A paint with effect elements including at least a polymer dispersion, a thickener, an extender, a colorant, water and at least one additional additive, **characterised in that** the paint is produced completely without solvent on the basis of water from a neutral base made from two intermediate products and from a colouring paste, wherein the first intermediate product includes at least a thickener, a pigment and/or a pigment paste, an extender, commercially available additives and water, the second intermediate product includes a thickener, an extender, commercially available additives and water and a polymer with a minimum film-forming temperature of 0° to 5°C and 0.5 to 15 wt.% of monovalent, divalent and/or trivalent metal ions, preferably divalent and/or trivalent metal ions, from the first, second and/or third main group, with which precipitation or coagulation of the effect elements is controlled, the colouring paste includes a pigment and/or a pigment paste, a wetting agent, a pH value stabilizer and water, wherein the paint includes 70 to 99 wt.% of the neutral base and 1 to 30 wt.% of the colouring paste.

2. A paint as claimed in Claim 1, **characterised in that** it preferably includes metal ions from the alkaline earth metal group.

3. A paint as claimed in one of Claims 1 and 2, **characterised in that** it contains at least 10 wt.% polymer compounds.

## Revendications

1. Produit de peinture avec des éléments à effet contenant au moins une dispersion de polymères, un épaississant, un diluant, un pigment, de l'eau ainsi qu'au moins un additif supplémentaire, **caractérisé en ce que** le produit de peinture est fabriqué à base d'eau et entièrement sans solvants à partir d'une base neutre obtenue avec deux semi-produits et d'une pâte colorante,
le premier semi-produit comprenant au moins un épaississant, un pigment et/ou une base pigmentée, un diluant, des additifs courants dans le commerce ainsi que de l'eau,
le deuxième semi-produit comprenant un épaississant, un diluant, des additifs courants dans le commerce ainsi que de l'eau et un polymère ayant une température minimale de formation de film de 0 °C à 5 °C et 0,5 % à 15 % en poids d'ions métalliques mono-, di- et/ou trivalents, de préférence des ions métalliques di- et/ou trivalents appartenant au groupe principal 1, 2 et/ou 3, permettant de contrôler la précipitation ou la floculation des éléments à effet,
la pâte colorante contenant un pigment et/ou une pâte pigmentée, un agent mouillant, un stabilisateur de pH et de l'eau,
lequel produit de peinture contient de 70 à 99 % en poids de la base neutre et de 1 à 30 % en poids de la pâte colorante.

2. Produit de peinture selon la revendication 1, **caractérisé en ce qu'**il contient de préférence des ions métalliques appartenant au groupe des métaux alcalinoterreux.

3. Produit de peinture selon l'une des revendications 1 à 2, **caractérisé en ce qu'**il contient au moins 10 % en poids de composés polymères.
